# EUROPÄISCHE PATENTSCHRIFT

(11) **EP 0 373 333 B1**
(45) Veröffentlichungstag und Bekanntmachung des Hinweises auf die Patenterteilung: **24.03.1993**
(21) Anmeldenummer: 89119978.8
(22) Anmeldetag: 27.10.1989
(51) Int. Cl.: F16D 65/092

(54) **Bremsklotz, insbesondere für Teilbelag-Scheibenbremse**
Brake pad, especially for caliper disc brake
Plaquette de frein, en particulier pour frein à disque à garniture en segment

(30) Priorität: 16.12.1988 DE 3842428
(43) Veröffentlichungstag der Anmeldung: 20.06.1990
(73) Patentinhaber: ALFRED TEVES GmbH, 60441 Frankfurt (DE)
(72) Erfinder: Gerhardt, Winfried, DE-6000 Frankfurt/Main (DE); Hennemann, Karlheinz, DE-6380 Bad Homburg (DE)
(74) Vertreter: Portwich, Peter

(56) Entgegenhaltungen:
- EP-A- 0 112 255
- EP-A- 0 138 081
- DE-U- 8 514 607
- DE-U- 8 525 203
- US-A- 4 467 897

## Beschreibung

Die Erfindung betrifft einen Bremsklotz gemäß dem Oberbegriff des Patentanspruches 1.

Ein derartiger Bremsklotz ist aus dem Dokument EP-A-0 138 081 bekannt, wobei das Dämpfungsblech mit einer an zwei Seiten der Habtefeder umgreifenden Berandung versehen ist, so daß eine formschlüssige Verbindung der Habtefeder mit dem Dämpfungsblech zustande kommt.

Bei dieser Art der Befestigung ist es als besonders nachteilig anzusehen, daß eine formschlüssige Fixierung des Dämpfungsbleches nur eingeschränkt zustande kommt. Das Dämpfungsblech is somit nicht ausreichend geführt und kann sich auf dem Belagträger verschieben. Insbesondere bildet die den Belagträger umgreifende Berandung der metallischen Habtefeder Angriffsflächen zur Korrosion, weshalb diese Befestigungsart als unbefriedigend anzusehen ist. Des weiteren ist die Gefahr der Schmutzablagerung und der Verformung der Habtefeder infolge der losen Kontaktierung mit dem Belagträger nich auszuschließen.

Aus diesen Gründen liegt der Erfindung die Aufgabe zugrunde, einen Bremsklotz der im Oberbegriff des Anspruches 1 angegeben Art dahingehend zu verbessern, daß eine verschiebe- und verdrehgesicherte Anordnung des Dämpfungsbleches auf dem Belagträger erfolgt.

Die Aufgabe wird erfindungsgemäß durch die kennzeichnenden Merkmale des Patentanspruches 1 gelöst.

Mit der erfindungsgemäßen Lösung wird auf einfache und kostengünstige Weise ein Dämpfungsblech auf dem Belagträger gehalten, das sich durch eine besonders verdreh- bzw. verschiebegesicherte Anordnung auszeichnet, indem vorzugsweise Flächen des Dämpfungsbleches mit angrenzenden Flächen des Belagträgers und der Haltefeder zusammenwirken, so daß eine translatorische wie auch rotatorische Bewegung des Dämpfungsbleches vermieden werden kann.

Eine weitere Ausgestaltung der Erfindung gegenüber der bekannten Befestigung des Dämpfungsbleches sieht vor, daß sowohl das Dämpfungsblech wie auch der Belagträger und die Haltefeder jeweils eine fluchtende Bohrung aufweisen, durch die ein Haltestift eingepreßt ist, wodurch das Dämpfungsblech, der Belagträger und die Haltefeder miteinander kraftschlüssig zusammenwirken. Hierdurch kann auf die Verwendung von Klebemitteln zwischen Belagträger und Dämpfungsblech verzichtet werden.

Weitere Merkmale, Vorteile und Anwendungsmöglichkeiten gehen aus den Unteransprüchen und der folgenden Beschreibung von fünf Ausführungsbeispielen hervor.

Es zeigen:
Fig. 1 eine Draufsicht mit Teilschnitt einer ersten Ausführungsform des Belagträgers mit Dämpfungsblech und Haltefeder,
Fig. 2 eine Draufsicht auf den Belagträger mit Dämpfungsblech und Haltefeder in einer zweiten Ausführungsform,
Fig. 3 eine Draufsicht mit Teilschnitt einer dritten Ausführungsform,
Fig. 4 eine Draufsicht auf eine vierte Ausführungsform und
Fig. 5 eine Draufsicht mit Teilschnitt einer fünften Ausführungsform des erfindungsgemäßen Bremsklotzes.

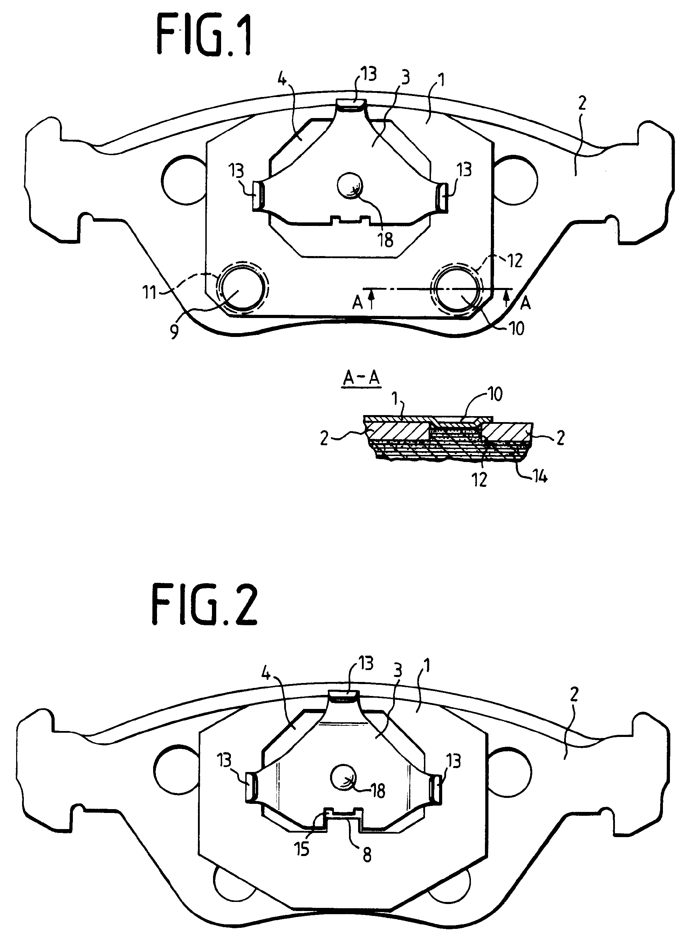

Der in Fig. 1 abgebildete plattenförmige Belagträger 2 mit kreissegmentförmiger Außenkontur ist aus Stahl gefertigt und weist auf seiner Rückseite das rechteckige Dämpfungsblech 1 und die Haltefeder 3 auf, wobei im Ecken-Bereich des Dämpfungsbleches 1 in einem definierten Abstand zueinander zylinderförmig eingepreßte Vertiefungen 9,10 vorgesehen sind, die in zwei in einem bestimmten Abstand zueinander angeordneten Bohrungen 11,12 im Belagträger 2 sich formschlüssig einfügen, so daß ein Verschieben oder Verdrehen der beiden Teile zueinander ausgeschlossen ist. In der achteckig gestalteten Öffnung 4 des Dämpfungsbleches 1 ist mittels in den Belagträger 2 eingepreßten Haltebolzen 5 die Haltefeder 3 kraftschlüssig gegen Verdrehen befestigt, wobei die Haltefeder 3 durch die räumlich aufgespreizten dreieckförmigen, als Haken 13 ausgebildeten Zungen, den Ausschnitt 4 des Dämpfungsbleches 1 örtlich überdecken, so daß ein vom Belagträger 2 abgelöstes Dämpfungsblech 1 durch die Zungen der Haltefeder 3 geführt ist. Der Teilschnitt des Belagträges aus Fig. 1 zeigt abschnittsweise den plattenförmigen Profilquerschnitt, der von der einen Seite vom Reibbelag 14 und von der gegenüberliegenden Seite vom Dämpfungsblech 1 begrenzt ist, wobei die gepreßte Vertiefung 10 des Dämpfungsbleches 1 in der Bohrung 12 des Belagträgers 2 den Reibbelag 14 berührt.

In der Fig. 2 ist eine weitere Ausführungsform des Erfindungsgegenstandes dargestellt, wobei in der Draufsicht auf die Rückseite des plattenförmigen, mit kreissegmentartiger Kontur ausgebildeten Belagträger 2 das Dämpfungsblech 1 und die Haltefeder 3 angeordnet ist. Das Dämpfungsblech 1 ist mit seiner äußeren Berandung der kreissegmentartigen Außenkontur des Belagträgers angepaßt, wobei angrenzende Seiten des Dämpfungsbleches 1 schräg verlaufen, so daß sich mit benachbarten Seiten stumpfe Kanten ergeben, die mit in vertikal angeordneten Seiten den Grundriß des Dämpfungsbleches 1 bilden. Der in seiner Grundform achteckig gestanzte Ausschnitt 4 im Dämpfungsblech 1 weist zum Zwecke der formschlüssigen Führung eine rechteckige Haltezunge 8 auf, die sich in einer gleichartig gestalteten Aussparung 15 an einer Grundseite der angenähert dreieckförmig gestalteten Haltefeder 3 einfügt. Somit ist das Dämpfungsblech 1 durch die mittels Haltebolzen 5 in der Rückenfläche des Belagträgers 2 befestigte Haltefeder 3 in seiner Lage positioniert und durch eine Klebemasse zwischen Belagträger 2 und Dämpfungsblech 1 gehalten.

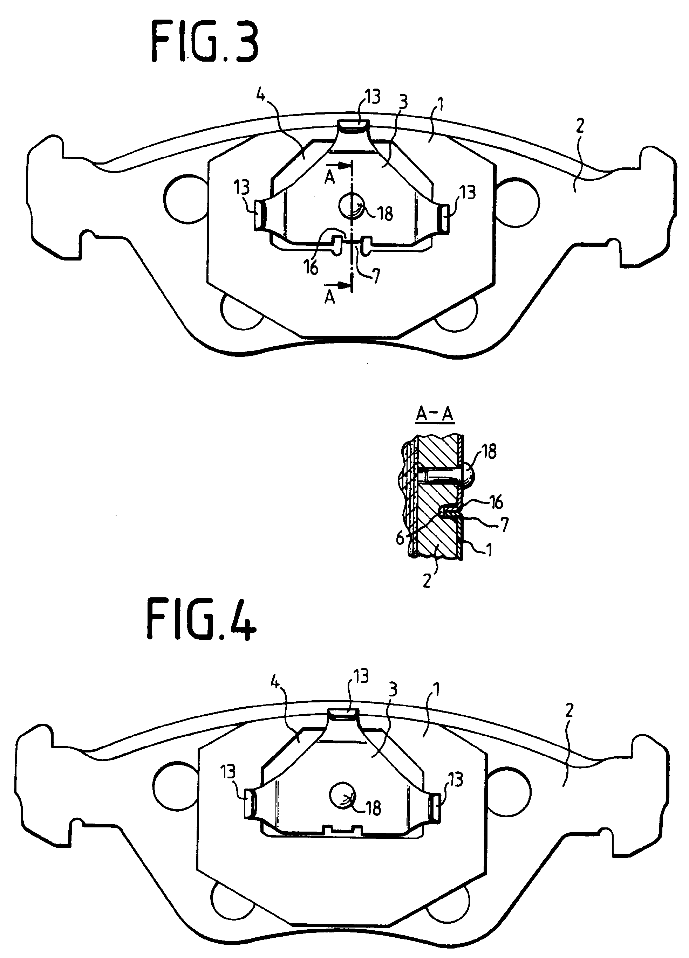

Fig. 3 zeigt analog zur Fig. 1 und 2 die Rückenansicht auf den Belagträger 2 mit dem angeklebten Dämpfungsblech 1 und die Haltefeder 3, versehen mit einem in dem Belagträger 2 eingepreßten Haltebolzen 5. Abweichend von der Verdreh-und Verschiebesicherungsmaßnahme des in Fig. 1 und 2 beschriebenen Dämpfungsbleches 1 weist sowohl die Haltefeder 3 wie auch das Dämpfungsblech 1 jeweils eine rechtwinklig abgekröpfte Führungsfahne 7 bzw. 16 auf, die zusammen in einem waagrechten Schlitz 6 des Belagträgers 2 eingreift, so daß beide Führungsfahnen 7 bzw. 16 gegen Verschieben und Verdrehen formschlüssig gesichert sind. Zur spannungsmindernden Verformung und Gestaltsanpassung im Übergangsbereich der abgekröpften Führungsfahnen 7,16 sind die angrenzenden Flächen hohlkehlenförmig ausgespart. Der zugeordnete Teilschnitt zeigt die abgekröpften Führungsfahnen 7,16 des Dämpfungsbleches 1 und der Haltefeder 3 im Schlitz 6 des Belagträgers 2 in gegenseitiger flächenförmiger Kontaktierung.

Fig. 4 veranschaulicht eine weitere vorteilhafte Kombination der in Fig. 1 bis 3 dargestellten Einzelteile, wonach eine Seite der Haltefeder 3 eine parallel zugeordnete Fläche des im Dämpfungsblech 1 befindlichen Ausschnittes 4 berührt, so daß die kontaktierenden Seiten eine Verdrehsicherung auf dem Belagträger 2 ermöglichen.

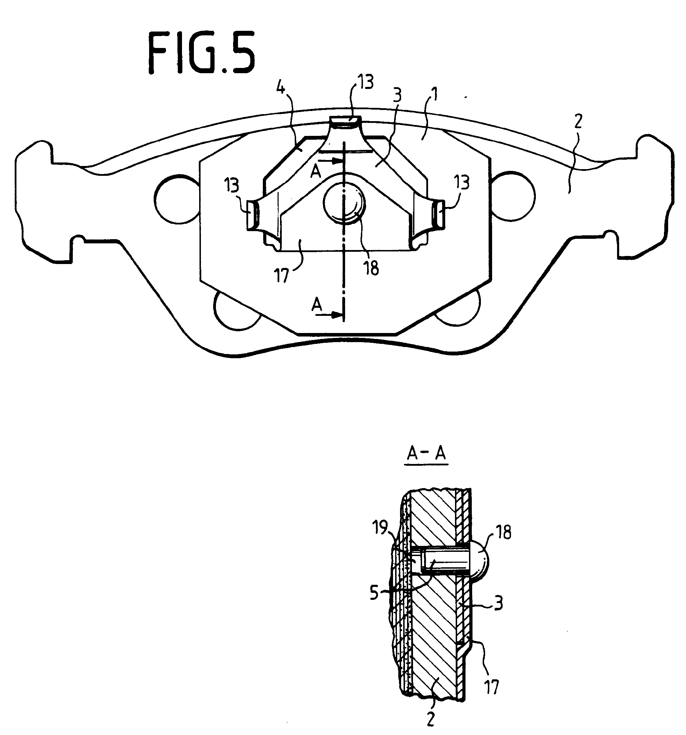

Fig. 5 zeigt das gestanzte Dämpfungsblech 1 in der Draufsicht, dessen Öffnung 4 auf der Rückseite des Belagträgers eine gekröpfte Haltelasche 17 zur Befestigung des Dämpfungsbleches 1 und Haltefeder 3 aufweist. Der zugehörige Teilschnitt zeigt die ebene Überlappung des Dämpfungsbleches 1 mit der Haltefeder 3 auf dem Belagträger 2, wobei der Schaft des Haltebolzens 5 die übereinander angeordneten Bohrungen im Dämpfungsblech 1 und in der Haltefeder 3 durchdringt und durch seinen Preßsitz im Belagträger 2 der Halbrundkopf 18 des Haltebolzens 5 die geforderte Flächenpressung auf die Haltelasche 17 des Dämpfungsbleches 1 und auf die Haltefeder 3 zur Verdreh- und Verschiebesicherung ausübt.

### Bezugszeichenliste

1 Dämpfungsblech
2 Belagträger
3 Haltefeder
4 Öffnung
5 Haltebolzen
6 Schlitz
7 Führungsfahne
8 Haltezunge
9 Vertiefung
10 Vertiefung
11 Bohrung
12 Bohrung
13 Haken
14 Reibbelag
15 Aussparung
16 Führungsfahne
17 Haltelasche
18 Halbrundkopf
19 Aufnahmebohrung

## Patentansprüche

1. Bremsklotz für Teilbelag-Scheibenbremse, mit einem Belagträger (2), der auf seiner Vordeseite einen Reibbelag (14) trägt und auf dessen Rückseite ein Dämpfungsblech (1) und eine Haltefeder (3) befestigt ist, wobei das Dämpfungsblech (1) durch formschlüssiges Zusammenwirken mit der Haltefeder (3) gegen Verdrehen und Verschieben in der Ebene des Belagträgers (2) gesichert ist, dadurch **gekennzeichnet,** daß das Dämpfungsblech (1) eine flächenhafte Öffnung (4) zur Aufnahme der Haltefeder (3) aufweist und daß die Haltefeder (3) mit dem Belagträger (2) vernietet ist.

2. Bremsklotz nach Anspruch 1, dadurch **gekennzeichnet,** daß örtliche flächenhafte Vertiefungen (9,10) im Dämpfungsblech (1) mit örtlichen flächenhaften Vertiefungen (11,12) entsprechender Gestalt im Belagträger (2) zusammenwirken so daß ein Verschieben und Verdrehen auf dem Belagträger (2) ausgeschlossen ist.

3. Bremsklotz nach einem der vorhergehenden Ansprüche, dadurch **gekennzeichnet,** daß das Dämpfungsblech (1) den Belagträger (2) unter ständiger Einwirkung einer Normalkraft berührt, so daß eine kraftschlüssige Verbindung zustande kommt.

4. Bremsklotz nach Anspruch 3, **dadurch gekennzeichnet,** daß die kraftschlüssige Verbindung zwischen Belagträger (2) und Dämpfungsblech (1) vorzugsweise durch ein Klebemittel mit definierten Kohäsions- und/oder Adhesionskräften hergestellt ist, wobei das Klebemittel die örtlichen zylinder-förmigen Vertiefungen (11,12) im Belagträger (2) benetzt.

5. Bremsklotz nach einem der vorhergehenden Ansprüche, dadurch **gekennzeichnet,** daß die flächenhafte Öffnung (4) des Dämpfungsbleches (1) mit ihrer Berandung örtlich die Flächen der Haltefeder (3) berührt, so daß Dämpfungsblech (1) durch die Haltefeder (3) gesichert ist.

6. Bremsklotz nach einem der vorhergehenden Ansprüche dadurch **gekennzeichnet**, daß das Dämpfungsblech (1) mit einer abgewinkelten Führungsfahne (7) in einen Schlitz (6) des Belagträgers (2) eingreift, wobei ein zweites abgewinkeltes zungenförmiges Stück der Haltefeder (3) im Schlitz (6) des Belagträgers (2) die Führungsfahne (7) des Dämpfungsbleches (1) berührt.

7. Bremsklotz nach einem der vorhergehenden Ansprüche, dadurch **gekennzeichnet,** daß das Dämpfungsblech (1), der Belagträger (2) und die Haltefeder (3) eine gemeinsame Aufnahmebohrung (19) aufweisen, durch die ein Haltebolzen (5) eingefügt ist, so daß das Dämpfungsblech (1), der Belagträger (2) und die Haltefeder (3) zwangsgeführt sind.

## Claims

1. A brake shoe for a spot-type disc brake, comprising a lining carrier (2) which carries a friction lining (14) on its front side, while a damping plate (1) and a retaining spring (3) are attached to its back side, the said damping plate (1) being prevented from turning and shifting in the plane of the lining carrier (2) by being in form-locking interaction with the retaining spring (3),
**characterized** in that the damping plate (1) is furnished with an areal opening (4) for accommodation of the retaining spring (3), and in that the retaining spring (3) is riveted to the lining carrier (2).

2. A brake shoe as claimed in claim 1,
**characterized** in that local areal depressions (9, 10) in the damping plate (1) interact with local areal depressions (11, 12) of identical configuration in the lining carrier (2), as a result whereof shifting and turning on the lining carrier (2) is excluded.

3. A brake shoe as claimed in any one of the preceding claims,
**characterized** in that the damping plate (1) contacts the lining carrier (2) under the constant effect of an axial force so that an operative connection is established.

4. A brake shoe as claimed in claim 3,
**characterized** in that the operative connection between lining carrier (2) and damping plate (1) is preferably established by an adhesive substance with defined cohesive and/or adhesive power, said adhesive substance wetting the local cylindrical depressions (11, 12) in the lining carrier (2).

5. A brake shoe as claimed in any one of the preceding claims,
**characterized** in that the areal opening (4) of the damping plate (1) locally contacts with its edge the surfaces of the retaining spring (3), as a result whereof the damping plate (1) is secured by the retaining spring (3).

6. A brake shoe as claimed in any one of the preceding claims,
**characterized** in that the damping plate (1) engages a slot (6) of the lining carrier (2) with a bent-off guide lug (7), a second bent-off tongue-shaped section of the retaining spring (3) contacting the guide lug (7) of the damping plate (1) within the slot (6) of the lining carrier (2).

7. A brake shoe as claimed in any one of the preceding claims,
**characterized** in that the damping plate (1), the lining carrier (2) and the retaining spring (3) are furnished with a common receiving bore (19) through which a retaining pin (5) is inserted, as a result whereof the damping plate (1), the lining carrier (2) and the retaining spring (3) are positively guided.

## Revendications

1. Plaquette de frein pour frein à disque à garnitures partielles, du type comprenant un porte-garniture (2) qui porte une garniture de friction (14) sur sa face avant et sur la face arrière duquel une tôle d'amortissement (1) et un ressort de maintien (3) sont fixés, la tôle d'amortissement (1) étant immobilisée en rotation et en translation dans le plan du porte-garniture (2) en coopérant avec le ressort de maintien (3) par complémentarité de formes, caractérisée en ce que la tôle d'amortissement (1) comporte une ouverture (4) s'étendant suivant une surface à deux dimensions et servant à recevoir le ressort de maintien (3) et en ce que ce ressort de maintien (3) est riveté sur le porte-garniture (2).

2. Plaquette de frein suivant la revendication 1, caractérisée en ce que des parties repoussées (9, 10), ménagées par endroits dans la tôle d'amortissement (1) et s'étendant suivant une surface à deux dimensions, coopèrent avec des parties repoussées (11, 12), de forme correspondante, ménagées par endroits dans le porte-garniture (2) et s'étendant suivant une surface à deux dimensions, ce qui exclut un déplacement translation ou en rotation sur le porte-garniture (2).

3. Plaquette de frein suivant l'une des revendications précédentes, caractérisée en ce que la tôle d'amortissement (1) vient au contact du porte-garniture (2) sous l'action permanente d'une force perpendiculaire, ce qui réalise une liaison par application de force.

4. Plaquette de frein suivant la revendication 3, caractérisée en ce que la liaison par application de force entre le porte-garniture (2) et la tôle d'amortissement (1) est de préférence réalisée au moyen d'une substance adhésive à forces de cohésion et/ou d'adhésion déterminées, cette substance adhésive imprégnant les parties repoussées (11, 12) cylindriques ménagées par endroits dans le porte-garniture (2).

5. Plaquette de frein suivant l'une des revendications précédentes, caractérisée en ce que, par son rebord, l'ouverture (4) de la tôle d'amortissement (1), qui s'étend suivant une surface à deux dimensions, vient par endroits au contact des surfaces du ressort de maintien (3), de sorte que la tôle d'amortissement (1) est immobilisée par ce ressort de maintien (3).

6. Plaquette de frein suivant l'une des revendications précédentes, caractérisée en ce que la tôle d'amortissement (1) s'emboîte, par une patte de guidage (7) coudée, dans une fente (6) du porte-garniture (2), tandis qu'une seconde partie coudée, en forme de patte, du ressort de maintien (3) vient au contact de cette patte de guidage (7) de la tôle d'amortissement (1) dans la fente (6) du porte-garniture (2).

7. Plaquette de frein suivant l'une des revendications précédentes, caractérisée en ce que la tôle d'amortissement (1), le porte-garniture (2) et le ressort de maintien (3) comportentt un trou commun de logement (19) dans lequel un goujon de blocage (5) est emboîté, de sorte que la tôle d'amortissement (1), le porte-garniture (2) et le ressort de maintien (3) sont guidés d'une manière forcée.
